**Europäisches Patentamt**

(19) **European Patent Office**

**Office européen des brevets**

(11) **EP 0 680 801 B1**

(12) ## EUROPEAN PATENT SPECIFICATION

(45) Date of publication and mention
of the grant of the patent:
**02.06.1999 Bulletin 1999/22**

(21) Application number: **94931202.9**

(22) Date of filing: **01.11.1994**

(51) Int. Cl.$^6$: **B23H 7/36**, B23H 1/10

(86) International application number:
**PCT/JP94/01845**

(87) International publication number:
**WO 95/12471** (11.05.1995 Gazette 1995/20)

(54) **WORKING LIQUID DETECTING APPARATUS, FOR WIRE-CUT ELECTRIC DISCHARGE MACHINES**

BEARBEITUNGSFLUSSIGKEITERFASSUNGSGERÄT FÜR DRAHTSCHNEIDEFUNKENEROSIONSMASCHINE

APPAREIL DE DETECTION DE LIQUIDE D'USINAGE POUR MACHINES D'ETINCELAGE A FIL DE COUPE

(84) Designated Contracting States:
**CH DE LI**

(30) Priority: **04.11.1993 JP 297575/93**

(43) Date of publication of application:
**08.11.1995 Bulletin 1995/45**

(73) Proprietor: **FANUC LTD.**
**Minamitsuru-gun, Yamanashi 401-05 (JP)**

(72) Inventors:
 • **KıTA, Yuki,**
 **Fanuc Manshonharimomi, Room 10-203**
 **Minamitsuru-gun, Yamanashi 401-05 (JP)**

 • **ABE, Hiroyuki,**
 **Fanuc Dai-2 Vira-karamatsu**
 **Minamitsuru-gun, Yamanashi 401-05 (JP)**

(74) Representative:
 **Billington, Lawrence Emlyn et al**
 **Haseltine Lake & Co.**
 **Imperial House**
 **15-19 Kingsway**
 **London WC2B 6UD (GB)**

(56) References cited:
 **JP-A- 3 277 422**      **JP-A-59 152 028**

## Description

The present invention relates to a wire cut electric discharge machine, and in particular, to a working fluid detective device for detecting a specific resistance of a working fluid in a wire cut electric discharge machine.

Conventionally, water is usually used as a working fluid in a wire cut electric discharge machine. In this case, the working fluid requires keeping at a predetermined conductivity. For this reason, the working fluid is controlled by means of an ion exchanger so that its specific resistance is detected, and becomes a constant value.

Generally, the specific resistance of working fluid gradually lowers as electric discharge machining progresses. In such a case, the specific resistance of working fluid is detected by means of a specific resistance detector. If the detected specific resistance is less than a preset value, the specific resistance of working fluid is enhanced by subjecting the working fluid to the ion exchanger, and the working fluid is controlled so that its specific resistance is kept to a predetermined value.

On the other hand, there is a case where a working fluid having low specific resistance is suitable for machining a workpiece, in dependence on a quality of the workpiece. For instance, in the case of using steel such as SKD and SKS materials as a workpiece, it is proper that working fluid has specific resistance of a degree of $1 \sim 2 \times 10^4 \Omega \cdot$ cm. Also, in the case of machining a workpiece such as copper and superhard steel, it is proper that working fluid has a relatively high specific resistance of a degree of $3 \sim 10 \times 10^4 \Omega \cdot$ cm. For this reason, in the case of executing a machining operation by using working fluid having low specific resistance after a machining operation is executed by using high specific resistance, tap water (its specific resistance is usually a degree of $0.5 \times 10^4 \Omega \cdot$ cm) is injected into a working fluid tank to execute the machining operation.

The working fluid in the working fluid tank is supplied to a nozzle through a discharge pump, and fed from the nozzle to a wire, thus electric discharge machining being executed. Then, the working fluid is used for the electric discharge machining, and thereafter, again returned to the working fluid tank through a filter, etc. In this case, a fluid level detector such as a float switch detects fluid level to prevent air from being sucked in the tank due to a lowering in the fluid level when the working fluid of the tank is discharged.

However, in the conventional wire cut electric discharge machine described above, the specific resistance and fluid level of the working fluid are detected by means of detectors independently located. For this reason, there is a problem in that a plurality of detectors must be located. This causes an increase in components and cost.

An object of the present invention is to provide a working fluid detective device in a wire cut electric discharge machine, which is capable of detecting specific resistance and fluid level of a working fluid by only one detector.

According to the present invention, there is provided a working fluid detector in a wire cut electric discharge machine including a working fluid tank for supplying a working fluid, the working fluid detector being arranged to detect the specific resistance of working fluid in the working fluid tank; characterised in that: the working fluid detector comprises first and second spaced-apart electrodes arranged so that they may be at least partially immersed in working fluid in the working fluid tank, and being coupled to circuitry operable to detect the specific resistance of the working fluid in dependence upon the electrical current flowing between the at least partially immersed first and second spaced-apart electrodes; and at least one of the first and second electrodes is located in the working fluid tank at such a level that a predetermined level of working fluid in the tank can be detected by the circuitry detecting the state of electrical insulation between the first and second electrodes, dependent upon the level of working fluid in the tank.

In the present invention, the working fluid detector detects two items, that is, a fluid level and a specific resistance of the working fluid, by only one detector.

In the working fluid detector according to the present invention, a fluid level detection of the working fluid is effected by detecting an insulation state between the electrodes. Also, in the working fluid detector according to the present invention, a specific resistance detection of the working fluid is effected by detecting the resistance of the working fluid in the vicinity of the electrodes. In the detection of fluid level and specific resistance of the working fluid, there may be a difference between the two detection outputs, rendering them distinguishable from one another.

In a wire cut electric discharge machine including a working fluid tank for supplying a working fluid, a working fluid detector comprises electrodes located in a position capable of being immersed in the working fluid in the working fluid tank. At least part of at least one of the electrodes composing the working fluid detector is located in a position preset as a detectable fluid level of working fluid. When the working fluid is gradually reduced in the working fluid tank and the electrode is no longer immersed in the working fluid at the preset position, the electrodes are in a state insulated from each other. Then, the detector outputs a detective value corresponding to the insulated state, and detects a reduction in the working fluid.

When the working fluid is increased in the working fluid tank, the electrodes become immersed in the working fluid. Immersion of the electrodes makes the insulated state between the electrodes no longer subsist. At this time, the working fluid detector outputs a detective value different from that of the aforesaid insulated state. An output indicative of a state that the electrodes are immersed in the working fluid is indicative of the specific resistance of the working fluid. Therefore, the specific resistance of the working fluid is detected on the basis of the detective value.

Thus, the detector of the present invention can detect two detective items, that is, a fluid level and a specific resistance of the working fluid, by only one detector.

Brief Description of the Drawings

Fig. 1 is a block diagram showing one embodiment according to the present invention;
Fig. 2 is a view for explaining a configuration of detective electrodes and a fluid level detection according to the present invention;
Fig. 3 is a view for explaining a configuration of detective electrodes and a fluid level detection according to the present invention;
Fig. 4 is a time chart showing one embodiment according to the present invention;
Fig. 5 is a block diagram showing one embodiment of a detector circuit of a working fluid detector according to the present invention; and
Fig. 6 is a view showing another embodiment of the detective electrodes according to the present invention.

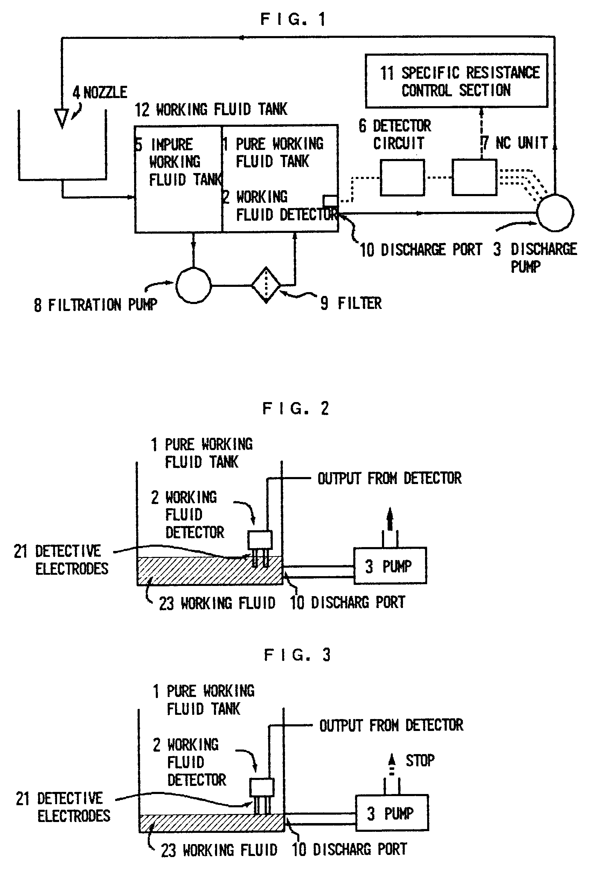

Referring now to Fig. 1 showing a block diagram of one embodiment according to the present invention, the constitution of the embodiment will be described below.

In Fig. 1, reference numerals 1 and 5 denote a pure working fluid tank and an impure working fluid tank of a working fluid tank 12, respectively. A discharge pump 3 supplies a pure working fluid from the pure working fluid tank 1 to a nozzle 4 of an electric discharge machining section, and ejects the pure working fluid to a gap between a wire of the electric discharge machining section and a workpiece, from the nozzle 4. The working fluid passed through the electric discharge machining section becomes an impure fluid, and is recovered in the impure working fluid tank 5. The impure fluid recovered in the tank 5 is pumped up by means of a filtration pump 8, and returned to the tank 1 after sludge or the like is removed by passing the impure fluid through a filter 9.

A discharge port 10 is formed on a side wall near the bottom of the pure working fluid tank 1. In order to discharge the working fluid to the nozzle 4, a pipe extending from the discharge pump 3 is connected to the discharge port 10. Also, a working fluid detector 2 is located in a position near to a height equivalent to a fluid level of the discharge port 10.

The working fluid detector 2 functions as a detector for measuring a fluid level and specific resistance of the working fluid in the pure working fluid tank 1, and includes a plurality of detection electrodes. In the case where the working fluid is sufficiently filled in the tank 1, the working fluid detector 2 measures the specific resistance of working fluid; on the other hand, in the case where the working fluid is reduced and the fluid level thereof reaches the vicinity of the discharge port 10, the detector 2 detects information that the fluid level of working fluid reaches the vicinity of the discharge port 10.

An output from the working fluid detector 2 is transmitted to an NC unit 7 through a detection circuit 6. The NC unit 7 is one of components generally - provided in an electric discharge machine, and a CPU of the NC unit 7 processes the output from the detective electrode 2, thus controlling specific resistance and fluid level of the working fluid.

The specific resistance of working fluid is controlled by driving a specific resistance control section 11 on the basis of an output from the NC unit 7. More specifically, the specific resistance of working fluid is enhanced by controlling the drive of a solenoid valve of an ion exchanger connected to the pure working fluid tank 1, or is lowered by supplying tap water to the pure working fluid tank 1 by controlling the drive of the solenoid valve. The control for the specific resistance of working fluid is known in the prior art; therefore, the detailed explanation thereof is omitted herein.

Next, referring to Figs. 2 and 3 showing fluid level detection according to the present invention, the control of a fluid level of working fluid will be described below.

Fig. 2 shows a state that a working fluid is sufficiently filled in the tank 1 and the working fluid detector 2 detects the specific resistance of working fluid. On the other hand, Fig. 3 shows a state that the working fluid is reduced and the working fluid detector 2 detects whether or not the working fluid is situated on a preset fluid level.

The working fluid detector 2 comprises two electrodes 21, and these electrodes 21 are located so as to be immersed in the working fluid in the pure working fluid tank 1.

Fig. 2 shows a state that the specific resistance of working fluid is detected by means of the working fluid detector 2. More specifically, two electrodes 21 are immersed in the working fluid in the pure working fluid tank 1, and specific resistance of the working fluid between two electrodes 21 can be detected. Thus, not only the specific resistance of working fluid is detected, but also information that the working fluid is situated on a preset fluid level is detected. An output from the working fluid detector 2 is outputted to a detector circuit 6 shown in Fig. 1. In this case, when the working fluid detector 2 is in a state of being immersed in the working fluid, the discharge pump 3 is driven while supplying the working fluid in the pure working fluid tank 1 to the nozzle.

Fig. 3 shows a state that the working fluid is reduced to the preset fluid level or less, and the lowering in the fluid level is detected by means of the working fluid detector 2. At this time, at least one of two electrodes 21 is situated on a fluid level which is not immersed in the working fluid in the pure working fluid tank 1, and the two electrodes 21 are therefore in a state of being insulated from one another. If the insulation between the electrodes 21 is detected, a detection is made such that the working fluid reaches a preset fluid level. A fluid level detected by the working fluid detector 2 is set according to the position where the electrodes 21 are located in the pure working fluid tank 1, namely according to the height such that at least one of the electrodes 21 is not immersed in the working fluid in the tank. More specifically, at the preset fluid level, there is no working fluid for electrically making a connection between the electrodes 21; for this reason, these electrodes are in a state of being insulated from each other. Thus, if the insulated state is detected, a lowering the fluid level of working fluid, to the preset fluid level, can be detected.

When the working fluid detector 2 detects a lowering in the fluid level of working fluid as aforesaid, the discharge pump 3 is stopped according to the detection output to prevent air from being sucked-in.

Therefore, in the embodiment shown in Figs. 2 and 3, the detective electrodes 21 are located so that their distal end portions, directed downwards, are situated at a position slightly above the upper end portion of the discharge port 10 connecting to the discharge pump 3. Thus, even if the fluid level of working fluid varies, the fluid level is set so that air does not enter into the discharge port 10.

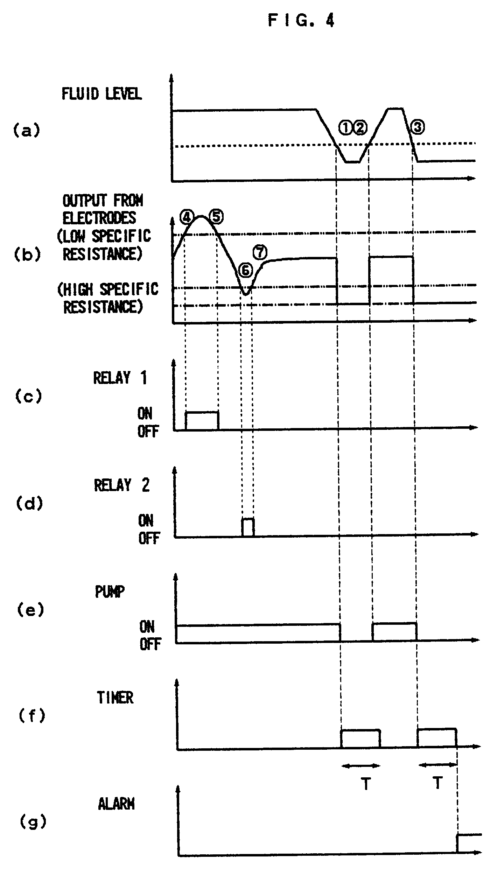

Fig. 4 is a time chart of one embodiment of the present invention shown in Fig. 1. The following is the description of an operation of the working fluid detective device based on the time chart.

Fig. 4(a) shows a fluid level of pure working fluid tank 1; Fig. 4(b) showing an output from the electrodes of working fluid detector; Fig. 4(c) and (d) showing a relay output for controlling specific resistance; Fig. 4(e) showing a drive signal for driving the discharge pump; Fig. 4(f) showing an output from a timer located in the NC unit; and Fig. 4(g) showing an output from an alarm.

In the fluid level shown in Fig. 4(a), a broken line represents a present fluid level at which the electrodes 21 detect a lowering to that level of the fluid level of working fluid. If the fluid level of working fluid is higher than the preset fluid level, the electrodes 21 are immersed in the working fluid. Conversely, if the fluid level of working fluid is lower than the preset fluid level, the electrodes 21 are not immersed in the working fluid; for this reason, the electrodes 21 are in a state of being insulated from each other. Therefore, if the axis of abscissas in the figure is set as a time change, the electrodes 21 are immersed in the working fluid until time ① and between time ② and time ③ in the figure; the electrodes 21 are situated at a position separated from the working fluid between time ① and time ② in the figure.

In the output from the electrodes shown in Fig. 4(b), the electrodes 21 are immersed in the working fluid until time ① and between time ② and time ③; therefore, the output from the electrodes shows specific resistance of the working fluid. On the other hand, the electrodes 21 are in a state of being insulated from each other between time ① and time ② and after time ③.

In Fig. 4(b), moreover, a two-dot chain line represents a preset value when preset specific resistance is high and a preset value when preset specific resistance is low, and a dotted chain line represents a preset value indicative of an insulated state. The following is the description of specific resistance control. The specific resistance of working fluid for electric discharge machining is controlled so that it is set between two preset specific resistances. In such specific resistance control, electric discharge machining is executed within a preset range of specific resistance sandwiched between the two-dot chain lines.

In an output indicative of specific resistance until time ①, if the specific resistance output at time ④ exceeds the preset value of low specific resistance, a relay 1 (not shown in Fig. 1) is turned on (see Fig. 4(c)), and control is started to increase specific resistance. If the specific resistance output is increased according to the control, it again exceeds the preset value of low specific resistance at time ⑤, and returns to the preset range sandwiched between the two-dot chain lines. If the specific resistance output is further increased and exceeds a preset value of high specific resistance at time ⑥, a relay 2 (not shown in Fig. 1) is turned on (see Fig. 4(d)); conversely, control is started to decrease the specific resistance. If the specific resistance is decreased according to the control, the specific resistance output again exceeds the preset value of high specific resistance at time ⑦, and returns to the preset range sandwiched between the two-dot chain lines.

When the working fluid is gradually reduced, the fluid level thereof approaches the vicinity of the discharge port. If the fluid level exceeds downwards (ie falls below) the preset fluid level, the electrodes 21 are in a state being insulated from each other. The electrode output at this time becomes the preset value indicative of an insulated state shown by the dotted chain line in Fig. 4(b). The NC unit 7 makes a comparison between the electrode output and a preset value indicative of an insulated state. Then, the NC unit 7 detects a lowering in the fluid level while outputting a control signal to stop the discharge pump. The control signal changes-over the discharge pump 3 from on to off, as shown in Fig. 4(e), and the discharge pump is stopped. Also, if a lowering in fluid level is detected, control is executed to rise the fluid level of working fluid (not shown). When the control is executed to rise the fluid level of working fluid and the working fluid again becomes higher than the preset fluid level at time ② within a predetermined time T counted by a timer (not shown) included in the NC unit 7, the discharge pump 3 starts to drive, and the working fluid is again supplied to the nozzle.

When the fluid level of working fluid becomes less than the preset fluid level at time ③, like the aforesaid time ①, the NC unit 7 detects a lowering in the fluid level while outputting a control signal to stop the discharge pump. The control signal changes-over the discharge pump 3 from on to off, as shown in Fig. 4(e), and the discharge pump is stopped. Unless the fluid level of working fluid rises within a predetermined time T counted by the timer (Fig. 4(f)), an alarm signal is outputted as shown in Fig. 4(g), and it is indicative that a fault occurs in fluid level control.

The specific resistance control described above is one embodiment of control over the specific resistance, and the invention is not limited to this one. The alarm shown in Fig. 4(g) may be used in not only a warning against a failure in fluid level control, but also in control for compensating a fluid level of working fluid of a wire cut electric discharge machine.

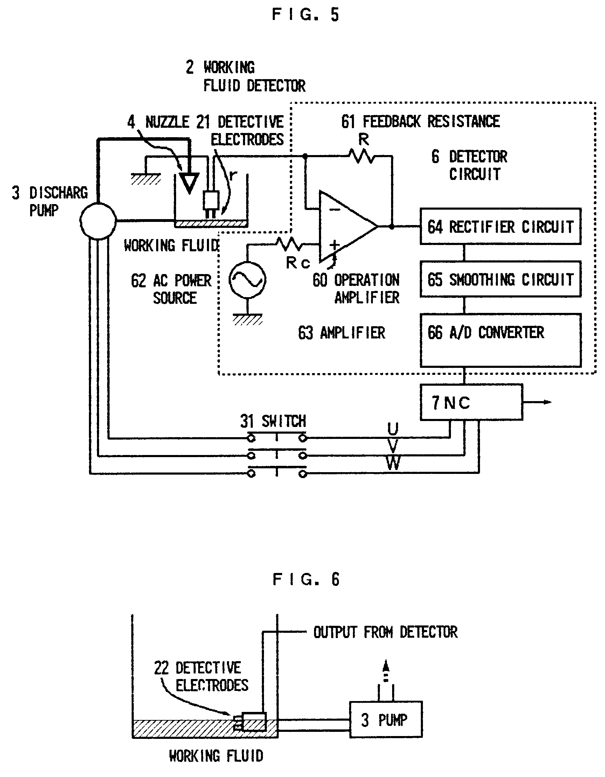

The following is the description of one embodiment of a detector circuit in the working fluid detective device of the present invention based on a block diagram shown in Fig. 5.

In Fig. 5, a detector circuit 6 shown by a broken line includes an amplifier circuit 63 for amplifying an output from the working fluid detector 2, a rectifier circuit 64 for rectifying an alternating-current output from the amplifier circuit 63, a smoothing circuit 65 for smoothing an output from the rectifier circuit 64, and an A/D converter circuit 66 for converting an analog output from the smoothing circuit 65 into a digital output. The digital output from the A/D converter circuit 66 is transmitted to the NC unit 7.

The amplifier circuit 63 outputs a signal corresponding to resistance between the electrodes 21 of the working fluid detector 2. If the resistance between the electrodes 21 of the working fluid detector 2 is set as "r", the amplifier circuit amplifies a voltage depending on the resistance "r", and outputs it as a detection output. The resistance "r" shows a variation in specific resistance of the working fluid between the electrodes 21 or an insulated state between them. Based on the resistance "r", the specific resistance of working fluid and a lowering the fluid level thereof are detected. The amplifier circuit 63 is composed of an operation amplifier 60. The electrodes 21 are connected to a minus terminal side of the operation amplifier 60, and an alternating-current power source 62 is connected to a plus terminal side of the operation amplifier 60. Also, a feedback resistor 61 is connected between the minus terminal side of the operation amplifier 60 and an output terminal of the operation amplifier 60. Assuming that a peak value of the voltage of the alternating-current power source 62 in the amplifier circuit 63 is set as Vi and an output from the amplifier circuit 63 is set as Vo, a relation between Vo and Vi is as shown by the following equation:

$$Vo = Vi \cdot (r + R)/r$$

In the relative equation, the output Vo detected in the fluid level state shown in Fig. 2 is determined on the basis of a resistance "r" between the electrodes 21 corresponding to the specific resistance of working fluid. Then, the detection output Vo is converted into a signal by means of the rectifier circuit 64, smoothing circuit 65 and A/D converter circuit 65 to obtain a digital value. The digital value thus obtained and a value preset in accordance with specific resistance are compared by means of the NC unit 7, thereby executing control for the specific resistance of working fluid.

Also, in the above equation, an output Vo detected in the fluid level state shown in Fig. 3 equals to Vi which is a peak value of the voltage of the AC power source 62 because there is an insulated state between the electrodes 21; for this reason, a resistance "r" between them becomes an infinite value. Then, the detection output Vo is converted into a signal by means of the rectifier circuit 64, smoothing circuit 65 and A/D converter circuit 65 to obtain a digital value. The digital value thus obtained and a value Vi preset for a detection of a lowering in the fluid level are compared by means of the NC unit 7, thereby a lowering in the fluid level of working fluid being detected, and the discharge pump 3 being stopped according to the detection.

In this case, a comparative value preset in the NC unit 7 may be modified in accordance with control contents and configuration of the amplifier 63.

Next, another embodiment will be described below with reference to Fig. 6.

In the aforesaid embodiment shorn in Figs. 2 and 3, the detective electrode 21 is arranged so that its electrodes are directed downward. On the other hand, in another embodiment, of Fig. 6, a detective electrode 22 is arranged so that its electrodes are directed in the lateral direction (horizontal direction) with respect to the working fluid. In the lateral direction arragement, one of two electrodes, which is situated uppermost, detects a lowering in the fluid level, and a position of the uppermost electrode is equivalent to a preset position for detecting a fluid level. Also, the other of the two electrodes, which is situated lowermost, may be the inner wall itself of the tank, or may be located at a position near the inner wall thereof. By arranging like this, a detective electrode of the detector may have a single-electrode configuration, in the sense that only one electrode need be specifically provided, with the tank wall providing the other electrode.

Moreover, in another embodiment, a length of the electrode immersed in the working fluid is always kept constant, regardless of the fluid level of the working fluid, in detecting specific resistance; therefore, there is no variation in the detected specific resistance caused due to difference in length of the electrode immersed in the working fluid.

In the embodiment described before, there may be provided a configuration in which two or more detective electrodes are located at different heights, or at the same height and at different positions, and an operative electrode is selected from these electrodes. In the case where an operative electrode may be selected from electrodes located at different heights, a height for detecting a fluid level can readily be changed. In the case where an operative electrode is selected from detection electrodes located at the same height and at different positions, a variation in specific resistance of a position in the tank can be compensated.

In an embodiment of the present invention, if the fluid level of working fluid does not rise within a predetermined time after it is lowered to a preset level or less, this is detected, and a detection is made that there is a failure in fluid level control of the working fluid.

As described above, the present invention can provide a working fluid detective device in a wire cut electric discharge machine, which is capable of detecting both specific resistance and fluid level of working fluid by only one detector.

## Claims

1. A working fluid detector (2) in a wire cut electric discharge machine including a working fluid tank (1) for supplying a working fluid, the working fluid detector (2) being arranged to detect the specific resistance of working fluid in the working fluid tank (1);

    characterised in that:

    the working fluid detector (2) comprises first and second spaced-apart electrodes (21,22) arranged so that they may be at least partially immersed in working fluid in the working fluid tank (1), and being coupled to circuitry (6) operable to detect the specific resistance of the working fluid in dependence upon the electrical current flowing between the at least partially immersed first and second spaced-apart electrodes (21,22); and
    at least one of the first and second electrodes is located in the working fluid tank (1) at such a level that a predetermined level of working fluid in the tank (1) can be detected by the circuitry (6) detecting the state of electrical insulation between the first and second electrodes, dependent upon the level of working fluid in the tank (1).

2. A working fluid detector according to claim 1, which is adapted to effect fluid level control on the basis of a comparison between an output value from said circuitry (6) and a preset value.

3. A working fluid detector according to claim 2, which is adapted to effect said fluid level control on the basis of a comparative result between an output value from said circuitry (6) within a predetermined time, and a preset value.

4. A working fluid detector according to any one of the preceding claims, which is adapted to effect specific resistance control so that an output from the circuitry (6) is set between two preset values indicating specific resistances.

5. A working fluid detector according to any one of the preceding claims, wherein said at least one electrode (21) is shaped and located such that it is directed downwardly with respect to a horizontal plane.

6. A working fluid detector according to any one of claims 1 to 4, wherein said at least one electrode (22) is shaped and located such that it is directed parallel to a horizontal plane.

7. A working fluid detector according to any one of the preceding claims, wherein there are provided two or more electrodes located at different heights.

8. A working fluid detector according to any one of claims 1 to 6, wherein there are provided two or more electrodes located at the same height and at different positions.

## Patentansprüche

1. Bearbeitungsflüssigkeits-Detektor (2) in einer elektrischen Entladungsdrahtschneidemaschine, die einen Bearbeitungsflüssigkeits-Tank (1) zum Zuführen einer Bearbeitungsflüssigkeit enthält, wobei der Bearbeitungsflüssigkeits-Detektor (2) angeordnet ist, um den spezifischen Widerstand von Bearbeitungsflüssigkeit in dem Bearbeitungsflüssigkeits-Tank (1) zu erfassen,
    dadurch **gekennzeichnet,** daß

    der Bearbeitungsflüssigkeits-Detektor (2) erste und zweite räumlich getrennte Elektroden (21, 22) umfaßt, die derart angeordnet sind, daß sie zumindest teilweise in Bearbeitungsflüssigkeit in dem Bearbeitungsflüssigkeits-Tank (1) eingetaucht sein können, und mit einer Schaltung (6) verbunden sind, die betreibbar ist, um den spezifischen Widerstand der Bearbeitungsflüssigkeit in Abhängigkeit von dem elektrischen Strom, der zwischen den zumindest teilweise eingetauchten ersten und zweiten räumlich getrennten Elektroden (21, 22) fließt, zu erfassen, und

zumindest eine der ersten und zweiten Elektroden in dem Bearbeitungsflüssigkeits-Tank (1) in einer derartigen Höhe positioniert ist, daß ein vorbestimmter Füllstand von Bearbeitungsflüssigkeit in dem Tank (1) mittels der Schaltung (6) erfaßt werden kann, die den Zustand der elektrischen Isolation zwischen den ersten und zweiten Elektroden, der von dem Füllstand der Bearbeitungsflüssigkeit in dem Tank (1) abhängig ist, erfaßt.

2. Bearbeitungsflüssigkeits-Detektor nach Anspruch 1, der dazu bestimmt ist, eine Flüssigkeitsfüllstands-Steuerung auf der Grundlage eines Vergleichs zwischen einem Ausgangssignalwert aus der Schaltung (6) und einem voreingestellten Wert zu bewirken.

3. Bearbeitungsflüssigkeits-Detektor nach Anspruch 2, der dazu bestimmt ist, die Flüssigkeitsfüllstands-Steuerung auf der Grundlage des Ergebnisses eines Vergleichs zwischen einem Ausgangssignalwert aus der Schaltung (6) innerhalb einer vorbestimmten Zeit und einem voreingestellten Wert zu bewirken.

4. Bearbeitungsflussigkeits-Detektor nach einem der vorhergehenden Ansprüche, der dazu bestimmt ist, eine Steuerung des spezifischen Widerstands derart zu bewirken, daß ein Ausgangssignal aus der Schaltung (6) zwischen zwei voreingestellten Werten, die spezifische Widerstände angeben, eingestellt wird.

5. Bearbeitungsflüssigkeits-Detektor nach einem der vorhergehenden Ansprüche, wobei die zumindest eine Elektrode (21) derart geformt und positioniert ist, daß sie in bezug auf eine horizontale Ebene abwärts gerichtet ist.

6. Bearbeitungsflüssigkeits-Detektor nach einem der Ansprüche 1 bis 4, wobei die zumindest eine Elektrode (22) derart geformt und positioniert ist, daß sie parallel zu einer horizontalen Ebene gerichtet ist.

7. Bearbeitungsflüssigkeits-Detektor nach einem der vorhergehenden Ansprüche, wobei zwei oder mehr Elektroden, die in unterschiedlichen Höhen positioniert sind, vorgesehen sind.

8. Bearbeitungsflüssigkeits-Detektor nach einem der Ansprüche 1 bis 6, wobei zwei oder mehr Elektroden, die auf gleicher Höhe und in unterschiedlichen Positionen positioniert sind, vorgesehen sind.

**Revendications**

1. Détecteur de fluide de travail (2) dans une machine d'étincelage à découpe par fil englobant une cuve de fluide de travail (1) pour alimenter un fluide de travail, le détecteur de fluide de travail (2) étant arrangé pour détecter la résistance spécifique du fluide de travail dans la cuve de fluide de travail (1); caractérisé en ce que:

le détecteur de fluide de travail (2) comprend des première et seconde électrodes (21, 22) espacées l'une de l'autre et arrangées de telle sorte qu'elles puissent être au moins en partie immergées dans le fluide de travail disposé dans la cuve de fluide de travail (1), et étant couplées à des composants de circuit (6) mis en service pour détecter la résistance spécifique du fluide de travail en fonction du courant électrique circulant entre les première et seconde électrodes (21, 22) espacées l'une de l'autre, au moins en partie immergées; et au moins une des première et seconde électrodes est située dans la cuve de fluide de travail (1) à un niveau tel qu'un niveau prédéterminé de fluide de travail dans la cuve (1) peut être détecté par les composants de circuit (6) détectant l'état d'isolation électrique entre les première et seconde électrodes en fonction du niveau de fluide de travail dans le réservoir (1).

2. Détecteur de fluide de travail selon la revendication 1, qui est conçu pour réaliser un contrôle du niveau de fluide sur base d'une comparaison entre une valeur de sortie provenant desdits composants de circuit (6) et une valeur de référence.

3. Détecteur de fluide de travail selon la revendication 2, qui est conçu pour réaliser ledit contrôle de niveau de fluide sur base d'un résultat comparatif entre une valeur de sortie provenant desdits composants de circuit (6) pendant un laps de temps prédéterminé, et une valeur de référence.

4. Détecteur de fluide de travail selon l'une quelconque des revendications précédentes, qui est conçu pour réaliser un contrôle de la résistance spécifique, si bien qu'une sortie provenant des composants de circuit (6) est réglée entre deux valeurs de rérérence indiquant des résistances spécifiques.

5. Détecteur de fluide de travail selon l'une quelconque des revendications précédentes, dans lequel la ou lesdites électrodes (21) est ou sont configurée(s) et située(s) de telle sorte qu'elle(s) est ou sont orientée(s) vers le bas par rapport à un plan horizontal.

6. Détecteur de fluide de travail selon l'une quelconque des revendications 1 à 4, dans lequel la ou lesdites électrodes (22) est ou sont configurée(s) et située(s) de telle sorte qu'elle(s) est ou sont orientée(s) parallèlement à un plan horizontal.

7. Détecteur de fluide de travail selon l'une quelconque des revendications précédentes, dans lequel on prévoit deux électrodes ou plus situées à des hauteurs différentes.

8. Détecteur de fluide de travail selon l'une quelconque des revendications 1 à 6, dans lequel on prévoit deux électrodes ou plus situées à la même hauteur et dans des positions différentes.

## F I G. 1

4 NOZZLE

12 WORKING FLUID TANK

11 SPECIFIC RESISTANCE CONTROL SECTION

5 IMPURE WORKING FLUID TANK

1 PURE WORKING FLUID TANK

2 WORKING FLUID DETECTOR

6 DETECTOR CIRCUIT

7 NC UNIT

10 DISCHARGE PORT    3 DISCHARGE PUMP

8 FILTRATION PUMP    9 FILTER

## F I G. 2

1 PURE WORKING FLUID TANK

2 WORKING FLUID DETECTOR

OUTPUT FROM DETECTOR

21 DETECTIVE ELECTRODES

3 PUMP

23 WORKING FLUID    10 DISCHARG PORT

## F I G. 3

1 PURE WORKING FLUID TANK

2 WORKING FLUID DETECTOR

OUTPUT FROM DETECTOR

STOP

21 DETECTIVE ELECTRODES

3 PUMP

23 WORKING FLUID    10 DISCHARG PORT

# FIG. 4

EP 0 680 801 B1

FIG. 5

FIG. 6